# EUROPÄISCHE PATENTSCHRIFT

(11) **EP 1 661 729 B1**
(45) Veröffentlichungstag und Bekanntmachung des Hinweises auf die Patenterteilung: **13.02.2013**
(21) Anmeldenummer: 05024487.0
(22) Anmeldetag: 10.11.2005
(51) Int. Cl.: G06K 19/06, G07D 7/06, B41M 5/24, B42D 15/00, B42D 15/10, B41M 3/14, C09D 5/00

(54) **Laserkennzeichnung von Wertdokumenten**
Laser marking of valuable documents
Marquage au laser sur document de valeur

(30) Priorität: 30.11.2004 DE 102004057918
(43) Veröffentlichungstag der Anmeldung: 31.05.2006
(73) Patentinhaber: Merck Patent GmbH, 64293 Darmstadt (DE)
(72) Erfinder: Klein, Sylke, Dr., 64380 Rossdorf (DE); Weiden, Michael, Dr., 64285 Darmstadt (DE); Kraas, Wolfgang, Dr., 64285 Darmstadt (DE); Ullmann, Klaus-Christian, Dr., 64625 Bensheim (DE); Krietsch, Burkhard, 64807 Dieburg (DE)

(56) Entgegenhaltungen:
- EP-A2- 0 372 274
- WO-A-89/00310
- WO-A-98/36913
- DE-A1- 3 634 098
- DE-A1- 4 410 431
- US-A- 4 523 777

## Beschreibung

Gegenstand der Erfindung ist die Laserkennzeichnung von Wertdokumenten, die auf Wechselwirkung der Laserstrahlung mit den eingesetzten Druckfarbensystemen beruht.

US 4 523 777 A offenbart die Erzeugung von fartigen Bildern durch Laserstrahlung.

Dem Fachmann sind seit langem Laserablationsverfahren bekannt, insbesondere für Wertpapiere wie Banknoten, die durch das vollständige Entfernen der aufgebrachten Druckfarbe beispielsweise negative Seriennummern erzeugen, wie z.B. in der DE-OS 28 36 529 beschrieben. Diese bieten Sicherheitsvorteile, weil zum einen Nummerierungswalzen mit negativen Zeichen schwer erhältlich sind und zum anderen das Erzeugen weißer Zahlen (vorausgesetzt das Banknotenpapier ist weiß) auf mehrfarbig bedruckten Wertpapieren mit herkömmlichen Druckverfahren schwierig ist, wie z.B. in der DE-OS 28 36 529 beschrieben.

Aus der WO 98/03348 ist das Laserätzen des Wertdokuments selbst, d.h. das örtliche Ablatieren des Dokuments bis hin zur Perforierung in Kombination mit Bleich- und Entfärbungserscheinungen der bedruckten Bereiche bekannt.

Weitere Sicherheitskennzeichnungen sind, wie beispielsweise in der WO 2004/009371 A1 beschrieben, durch das laserinduzierte Erzeugen von fühlbaren (taktilen) reliefartigen Markierungen auf Wertdokumenten mit/ohne Schwärzung bzw. Farbveränderung des entsprechend modifizierten Sicherheitspapiers möglich.

Die im Stand der Technik beschriebenen Verfahren zur Kennzeichnung von Wertdokumenten haben aber den Nachteil, dass nur eine vollflächige und vollständige Laserablation, die die Kennzeichnung erzeugt, möglich ist.

Aufgabe der vorliegenden Erfindung war es daher die fälschungs- und kopiersichere Kennzeichnung von Wertdokumenten unter Verwendung der Lasertechnik zu entwickeln, die die oben angegebenen Nachteile nicht aufweist.

Überraschenderweise wurde nun gefunden, dass die Laserkennzeichnung von Wertdokumenten, sofern sie ein spezielles Druckfarbenschichtsystem aufweisen, möglich ist durch
1. selektiven Farbabtrag der Druckfarben und
2. Erzeugung einer Mikroschrift mit/ohne Taktilität

Die Lasertechnik selbst bietet bei der Kennzeichnung Vorteile, da sie aufgrund der hohen Anschaffungskosten und des apparativen Aufwandes kaum für Fälschungen zur Verfügung steht und Markierungen auf Wertdokumenten erzeugt, die schwerlich oder gar nicht durch übliche Druckverfahren nachgestellt werden können.

Gegenstand der vorliegenden Erfindung ist die Laserkennzeichnung von Wertdokumenten, gemäß Anspruch 1.

Mit Hilfe des erfindungsgemäßen Verfahrens ist es möglich Wertdokumente wie Banknoten, Bank- und Kreditkarten, Schecks, Scheckkarten, Wertpapiere, Urkunden, Ausweise, Wert- und Briefmarken, Zertifikate, Identifikationskarten, Prüfungsbescheinigungen, Bahn- und Flugtickets, Eintrittskarten, Telefonkarten, etc., fälschungs- und kopiersicher, permanent und kodiert zu kennzeichnen.

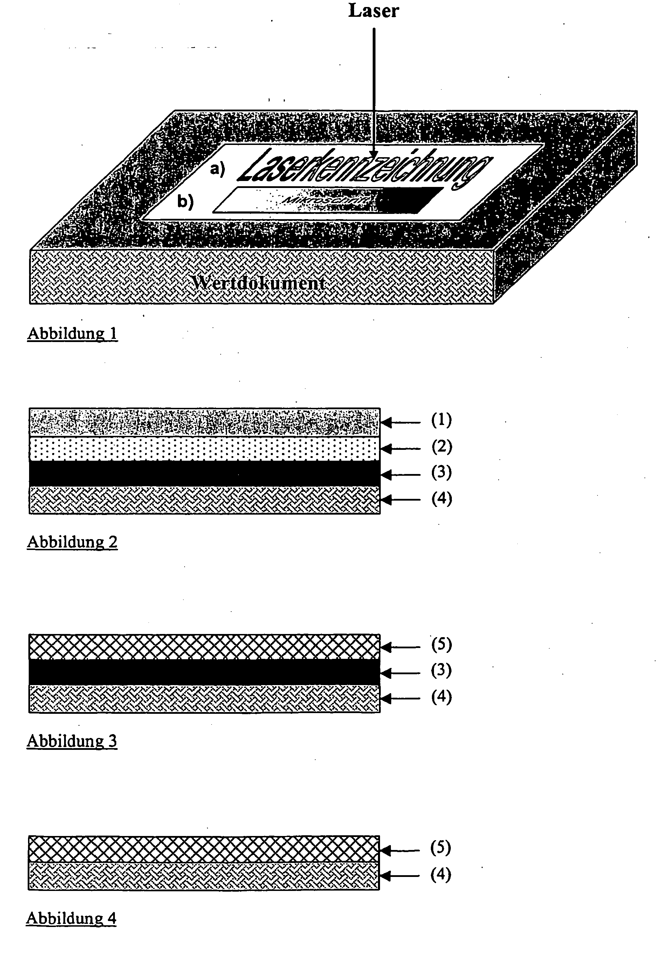

Wie in Abb. 1 a) dargestellt führt die Einwirkung von geeigneter Laserstrahlung auf die erfindungsgemäß angewendeten Druckfarbensysteme zum selektiven Abtrag einer Farbschicht, d.h. es werden sehr fein graduierte Farbverläufe vom Originalfarbton bis zum vollständigen Abtrag innerhalb des Kennzeichnungsbildes erzielt. Dies kann mit der - für das Laserablenkverfahren typischen - quasi unbegrenzten Flexibilität und Individualität erfolgen, d.h. für jegliche graphische Darstellung, für alphanumerische Zeichen (Buchstaben, Zahlen etc.), für zufällig generierte oder sich fortlaufend ändernde Seriennummern und Kodierungen (Barcode, Data Matrix Code, etc.).

Unter Verwendung von speziellen Sicherheitspigmenten und -farbstoffen sind fälschungs- und kopiersichere Kennzeichnungen möglich. Das sind im - für das menschliche Auge - sichtbaren Bereich z.B. Pigmente mit Perlglanzeffekt, mehrschichtige Interferenzpigmente, optisch variable Pigmente, oder im - für das menschliche Auge - unsichtbaren Bereich (IR-, UV-Bereich) entsprechende Farbmittel, die selektiv bis vollständig abgetragen bzw. in ihren aktiven Farbzentren geschwächt bzw. zerstört werden können oder nach dem Abtrag einer obersten anderen Farbschicht sichtbar bzw. unter UV/-IR-Licht detektierbar werden.

Zusätzlich dazu werden sowohl in den selektiv abgetragenen als auch in den nicht abgetragenen bedruckten Bereichen mit Hilfe eines geeigneten Lasers Mikroschriften/-bilder mit Schrift-/Bildgrößen unter 500 µm und Strichstärken unter 60 µm erzeugt werden (Abb.1 b).

Diese Kennzeichnung erfolgt innerhalb des aufgedruckten und/oder des bereits selektiv ablatierten Schichtsystems durch Abtrag bzw. Entfärbung/Karbonisierung der Druckfarbe.

Abhängig von den verwendeten Druckfarben und Laserparametern können die so erzeugten Mikroschriften/-bilder eine Taktilität aufweisen.

Die erfindungsgemäßen Druckfarbensysteme können auf verschiedene Substrate (Abb. 2, Schicht (4)) wie z.B. Papier, Pappe, Karton, Kunststoffe, Kunststofffolien und Laminate gedruckt und der Laserkennzeichnung unterzogen werden. Für Sicherheitsanwendungen kommen insbesondere Papiere mit Anteilen von Fasern der Einjahrespflanzen wie Baumwolle (z.B. Baumwoll-Velinpapier) oder von Baumwollfasergemischen oder von Kunststofffasern in Betracht, die ein- oder mehrlagig aufgebaut sein können.

Alle dem Fachmann bekannten Kunststoffe sind geeignet, insbesondere Polyester, Polycarbonate, Polyethylen, Polypropylen, Polyimide, Polyacetale, Polyamiden, Polyesterester, Polyetherester, Polyphenylenether, Polyacetal, Polybutylenterephthalat, Polymethylmethacrylat, Polyvinylacetal, Polyvinylchlorid, Polystyrol, Acrylnitril-Butadien-Styrol (ABS), Acrylnitril-Styrol-Acrylester (ASA), Polyethersulfone und Polyetherketone sowie deren Copolymeren und/oder Mischung.

Für die erfindungsgemäßen Druckfarbensysteme haben sich die in den Abbildungen 2-4 dargestellten Schichtsysteme und -folgen als besonders geeignet erwiesen.

Abb. 2 zeigt ein Druckfarbensystem, aufgebracht auf einem Wertdokument (4), bestehend aus einer Druckfarbe (1), einer lasersensitiven Schicht (2) und einer weiteren Druckfarbe (3). Die Schichten (1) und (3) können dabei gleich oder verschieden sein.

In Abb. 3 ist auf der Druckfarbe (3) nur eine weitere Druckfarbe (5) aufgetragen, die entweder das Laserlicht selbst absorbiert oder die lasersensitive Komponente aus Schicht (2) enthält.

Abb. 4 stellt die Druckfarbe (5), auf ein Wertdokument aufgebracht, dar.

Die Dicke der Schichten (1), (2), (3) und (5) beträgt in der Regel 1 - 15 µm, insbesondere 2 - 10 µm, und ganz besonders bevorzugt 4 - 8 µm, wobei die Gesamtdicke aller Schichten 25 µm nicht übersteigen sollte. Die Dicke der Schichten (1), (2), (3) und (5) kann dabei gleich oder verschieden sein.

Unter entsprechender Lasereinwirkung wird die Druckfarbe (1) bzw. (5) fein graduiert, d.h. selektiv bis vollständig durch die lasersensitive Komponente in Schicht (2) bzw. (5) abgetragen.

Des weiteren kann mit der Eigenabsorption des Laserlichts durch die Druckfarbe (5) eine Schwärzung bzw. ein Aufhellen derselben erzielt werden. Dies kann durch den Zusatz einer geeigneten Polymerkomponente wie z.B. des intrinsisch markierenden Polyphenylensulfids (PPS) verstärkt werden.

Die darunter liegende Druckfarbenschicht (3) bzw. das Wertdokument (4) wird entsprechend fein graduiert und/oder als Mikroschrift sichtbar.

Die Druckfarben werden vorzugsweise mit folgenden Druckverfahren appliziert:
- Hochdruck
- Tiefdruck
- Flexodruck
- direkter Offsetdruck
- indirekter Offsetdruck
- Tampondruck
- Intagliodruck
- Siebdruck

Des weiteren ist die Applikation der Farbe mittels partieller oder Vollflächenlackierung in-line oder off-line möglich.

Als Druckfarbe (1) kommen alle farbmittelhaltigen Druckfarben in Betracht, die im angegebenen Wellenlängenbereich für das Laserlicht idealerweise transparent und/oder transluzent sind.

Als Druckfarbe (3) können alle für den Wertdokumentedruck vorstellbaren Druckfarben, insbesondere solche mit weiteren Sicherheitsmerkmalen eingesetzt werden, da diese keiner Strahlenbelastung ausgesetzt sind.

Geeignet sind alle dem Fachmann bekannten Farbmittel, die sich bei der Laserbestrahlung nicht zersetzen und photostabil sind. Bei dem Farbmittel kann es sich auch um ein Gemisch aus zwei oder mehr Substanzen handeln. Der Anteil an Farbmitteln in der Druckfarbe beträgt vorzugsweise zwischen 5 und 35 Gew.%.

Als Farbmittel kommen alle dem Fachmann bekannten organischen und anorganischen Farbstoffe und Pigmente in Frage. Insbesondere geeignet sind Pigmente mit Perlglanzeffekt, mehrschichtige Interferenzpigmente, optisch variable Pigmente, UV-Farbstoffe, Azopigmente und -farbstoffe, wie z.B. Monoazopigmente- und Farbstoffe, Diarylpigmente, Isoindoline, Benzimidazolone, Disazopyrazolone, Beta-Naphthole, Naphthol AS-Pigmente, Disazo-Kondensationspigmente, BONS-Pigmente, polycyclischen Pigmente und Farbstoffe, wie z. B. Triarylcarboniumpigmente, Perinone, Perylene, Anthrachinone, Flavanthrone, Isoindolinone, Pyranthrone, Anthrapyrimidine, Chinacridone, Thioindigo, Dioxazine, Indanthronone, Diketo-Pyrolo-Pyrrole, Chinonphthalone, Metall-komplexierende Pigmente und Farbstoffe, wie z. B. Beta-Kupferphthalocyanine, Azomethin-, Dioxim-, Isoindolinon-Komplexe, Metallpigmente, Oxid- und Oxidhydroxid-pigmente, Oxid-Mischphasenpigmente, Metallsalzpigmente, wie z. B. Chromat-, Chromate-Molybdat-Mischphasenpigmente, Carbonatpigmente, Sulfid- und Sulfid-Selenpigmente, Komplexsalzpigmente und Silikatpigmente sowie rußbasierende Pigmente.

Von den genannten Farbmitteln sind insbesondere bevorzugt Monoazopigmente, Diarylpigmente, Benzimidazolone, Beta-Naphthole, Naphthol AS-Pigmente, BONS-Pigmente, Triarylcarboniumpigmente, Beta-Kupferphthalocyanine, Ruße (Pigment Black 7), Perlglanz- und optisch variable Pigmente sowie Metallpigmente.

Als lasersensitive Komponente in Schicht (2) oder in der Laserlichtabsorbierenden Druckfarbe (5) können alle Materialien verwendet werden, die im angegebenen Wellenlängenbereich die Laserlichtenergie ausreichend absorbieren und in Wärmeenergie umwandeln.

Die für die Markierung geeigneten lasersensitiven Komponenten basieren vorzugsweise auf Kohlenstoff, Ruß, Graphit, Metalloxiden, wie z.B. Sn(Sb)O₂, TiO₂, Anthracen, IR-absorbierenden Farbmitteln, wie z.B. Perylene/Rylene, Pentaerythrit, Kupferhydroxidphosphaten, Molybdändisulfiden, Antimon(III)oxid und Wismuthoxychlorid, plättchenförmigen, insbesondere transparenten oder semitransparenten Substraten aus z. B. Schichtsilikaten, wie etwa synthetischer oder natürlicher Glimmer, Talkum, Kaolin, Glasplättchen, SiO₂-Plättchen oder synthetischen trägerfreien Plättchen. Weiterhin kommen auch plättchenförmige Metalloxide, wie z. B. plättchenförmiges Eisenoxid, Aluminiumoxid, Titandioxid, Siliziumdioxid, LCP's (Liquid Crystal Polymers), holographische Pigmente, leitfähige Pigmente oder beschichtete Graphitplättchen in Betracht.

Als plättchenförmige Pigmente können auch Metallpulver eingesetzt werden, die unbeschichtet oder auch mit einer oder mehreren Metalloxidschichten bedeckt sein können; bevorzugt sind z. B. Al-, Cu-, Cr-, Fe-, Au-, Ag- und Stahlplättchen. Sollten korrosionsanfällige Metallplättchen wie z. B. Al-, Fe- oder Stahlplättchen unbeschichtet eingesetzt werden, werden sie vorzugsweise mit einer schützenden Polymerschicht überzogen.

Neben plättchenförmigen Substraten können auch kugelförmige Pigmente eingesetzt werden, z. B. aus Al, Cu, Cr, Fe, Au, Ag und/oder Fe.

Besonders bevorzugte Substrate sind mit ein oder mehreren Metalloxiden beschichtete Glimmerschuppen. Als Metalloxide werden dabei sowohl farblose hochbrechende Metalloxide, wie insbesondere Titandioxid, Antimon(III)oxid, Zinkoxid, Zinnoxid und/oder Zirkoniumdioxid verwendet als auch farbige Metalloxide, wie z. B. Chromoxid, Nickeloxid, Kupferoxid, Kobaltoxid und insbesondere Eisenoxid (Fe₂O₃, Fe₃O₄). Insbesondere bevorzugt wird als lasersensitive Komponente Antimon(III)oxid allein oder in Kombination mit Zinnoxid verwendet.

Diese Substrate sind bekannt und größtenteils kommerziell erhältlich, z. B. unter der Marke Iriodin® Lazerflair der Fa. Merck KGaA, und/oder können nach dem Fachmann bekannten Standardverfahren hergestellt werden. Pigmente auf der Basis transparenter oder semitransparenter plättchenförmiger Substrate werden z. B. beschrieben in den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017, 38 42 330, 44 41 223.

Beschichtete SiO₂-Plättchen sind z. B. bekannt aus der WO 93/08237 (nasschemische Beschichtung) und der DE-OS 196 14 637 (CVD-Verfahren).

Mehrschichtpigmente basierend auf Schichtsilikaten sind beispielsweise aus den deutschen Offenlegungsschriften DE 196 18 569, DE 196 38 708, DE 197 07 806 und DE 198 03 550 bekannt. Besonders geeignet sind Mehrschichtpigmente, die folgenden Aufbau besitzen:

Glimmer + TiO₂ + SiO₂ + TiO₂

Glimmer + TiO₂ + SiO₂ + TiO₂/Fe₂O₃

Glimmer + TiO₂ + SiO₂ + (Sn, Sb)O₂

SiO₂-Plättchen + TiO₂ + SiO₂ + TiO₂

Besonders bevorzugte laserlichtabsorbierende Substanzen sind Anthracen, Perylene/Rylene, wie z.B. Ter- bzw. Quarter-Rylentetracarboxydiimide), Pentaeerythrit, Kupferhydroxidphosphate, Molybdändisulfid, Antimon(III)oxid, Wismuthoxychlorid, Kohlenstoff, Antimon, Sn(Sb)O₂, TiO₂, Silikate, SiO₂-Plättchen, mit Metalloxiden beschichtete Glimmer und/oder SiO₂-Plättchen, leitfähige Pigmente, Sulfide, Phosphate, BiOCl, oder deren Gemische.

Die lasersensitive Komponente kann auch ein Gemisch aus zwei oder mehreren Komponenten sein und ist zu 0,5 - 40 Gew.% bezogen auf das Gesamtgewicht der flüssigen Druckfarbe vorhanden.

Geeignete Bindemittel für die Schichtsysteme sind z. B.:
a) für wässrige Systeme:
   Acrylate, Methacrylate, Polyester, Polyurethane, Polyvinylalkohole, Polyvinylpyrrolidone, sowie Colpolymere der genannten Substanzen
b) für lösemittelbasierende Systeme:
   Nitrocellulose, Ethylcellulose, Polyamide, PCV/PVA-Coplymere, Polyvinylbutyrale, Polyisobutylen, Chlorkautschuk, kolphoniummodifizierte Phenolharze, Maleinsäureharze, Calcium/Zink-Resinate-EHEC), Acrylate sowie Copolymere der genannten Substanzen
c) Strahlenhärtende (UV, EB) Systeme:
   Epoxyacrylate, Polyurethanacrylate, Polyesteracrylate, Polyetheracrylate
d) ölbasierende Systeme:
   Kolophoniummodifizierte Phenolharze, Maleinsäuremodifizierte Phenolharze, Alkydharze (z. B Leinölalkydharz), Kohlenwasserstoffharze

Der Bindemittelgehalt beträgt 10-50 Gew.% bezogen auf das Gesamtgewicht des flüssigen Systems.

Geeignete Lösungsmittel und Co-Lösemittel für die Schichtsysteme sind z. B.:
a) für wässrige Systeme:
   Wasser, Wasser-Alkoholgemische
b) für lösemittelhaltige Systeme:
   Ethylalkohol, Isopropylalkohol, n-Propylalkohol, Aceton, Ethylacetat, Isopropylacetat, n-Propylacetat, Methoxypropanol, Ethoxypropanol, Toluol, aliphatische Kohlenwasserstoffe bzw. Gemische aus den genannten Lösungsmitteln
c) für strahlenhärtende Systeme (reaktive Verdünner):
   Hexandioldiacrylat, Di/Tripropylenglykoldiacrylat, Trimethylpropantriacrylat, Trimethylolpropanethoxytriarylat
d) für ölbasierende Systeme:
   Mineralöle, vegetatible Öle sowie Mischungen beider Substanzklassen.

Der Lösemittelgehalt beträgt 30 bis 70 Gew.% bezogen auf das flüssige System.

Die Ablation erfolgt mit einem geeigneten Laser, vorzugsweise im Strahlablenkungsverfahren oder mit geeigneter Maske im Maskenverfahren.

Der verwendete Laser hat im allgemeinen eine Wellenlänge im Bereich von 157 nm bis 10,6 µm, vorzugsweise im Bereich von 532 nm bis 10,6 µm. Besonders bevorzugt werden Nd:YAG- und YVO₄- Laser (1064 bzw. 532 nm), Diodenlaser (808 - 980 nm) und CO₂-Laser (10,6 µm) eingesetzt. Jedoch sind auch mit anderen herkömmlichen Lasertypen, die eine Wellenlänge in einem Bereich hoher Absorption der verwendeten laserlichtabsorbierenden Substanz aufweisen, die gewünschten Ergebnisse zu erzielen.

Der zu erzeugende Abtrag bzw. die Mikroschrift werden durch die Bestrahlungszeit (bzw. Pulszahl bei Pulslasern) und Bestrahlungsleistung des Lasers (Pulsleistungsdichte bei Pulslasern) sowie des verwendeten Schichtsystems bestimmt.

Die Parameter des verwendeten Laser hängen von der jeweiligen Anwendung ab und können im Einzelfall vom Fachmann ohne weiteres ermittelt werden.

Vorzugsweise wird ein YAG-Laser, YVO₄-Laser, Diodenlaser bzw. CO₂₋Laser in unterschiedlichen Laserwellenlängen, 1064 nm, 808 - 980 nm bzw. 10,6 µm, verwendet. Die Kennzeichnung ist sowohl im kontinuierlichem (cw)- als auch im Pulsbetrieb möglich. Das geeignete Leistungsspektrum des Kennzeichnungslasers umfasst 2 bis 300 Watt, die Pulsfrequenz liegt im Bereich von 1 bis 200 kHz.

Die erfindungsgemäßen Laserkennzeichnungen können überall dort eingesetzt werden, wo Wertdokumente individuell und flexibel sowie verschlüsselt markiert werden sollen.

Dazu zählen Wertdokumente wie Banknoten, Schecks, Wertpapiere, Urkunden, Ausweise, Wert- und Briefmarken, Zertifikate, Prüfungsbescheinigungen, Eintrittskarten, Bahn- und Flugtickets, die auf einer Papiergrundlage beruhen; Scheckkarten, Identifikationskarten, Telefonkarten, Bank- und Kreditkarten etc., die aus geeignetem Papier oder Kunststoff bestehen wie auch Laminate oder andere Verbunde aus Kunststoff und Papier.

Die folgenden Beispiele sollen die Erfindung erläutern ohne sie jedoch zu begrenzen.

### Ausführungsbeispiele

### Beispiel 1: Herstellung einer Druckfarbe (1, 3)

Lösemittelhaltiger Tiefdruck

| | |
|---|---|
| 25 g | Colorcode® Turquoise-Lilac (Sicherheitspigment der Fa. Merck KGaA) |
| 75 g | Nitrocellulose/Alkohol Verschnitt |

Das Pigment wird in das Bindemittelsystem unter Vermeidung hoher Scherkräfte eingerührt. Anschließend erfolgt die Einstellung auf Druckviskosität (DIN 4-Becher (DIN 53211) 14-25 s).

Zu 65 g Druckfarbenkonzentrat (s. o.) werden 35 g Ethoxypropanol zugegeben.

Die Verdruckung der Farbe erfolgt im Tiefdruck unter Verwendung eines geeigneten Tiefdruckrasters (z. B. 60 Linien/cm, elektronisch graviert) auf einer geeigneten Druckmaschine (z. B. Moser-Rototest). Die Schichtdicke beträgt 4 - 8 µm.

### Beispiel 2: Herstellung einer lasersensitiven Schicht (2)

| | |
|---|---|
| 18,5 g | Ethylacetat |
| 1,5 g | PVB (Polyvinylbutyral, Pioloform® , Fa. Wacker-Chemie) |
| 3-5 g | Sn(Sb)O₂ (d₅₀ Wert < 1,1 µm) (Fa. Du Pont) |

Polyvinylbutyral wird im vorgelegten Lösungsmittel Ethylacetat gelöst und gut verrührt. Anschließend wird die lasersensitive Komponente Sn(Sb)O₂ eingerührt und eine homogene Farbe hergestellt.

Die Verdruckung der Farbe erfolgt im Tiefdruck wie in Beispiel 1 beschrieben.

### Beispiel 3: Herstellung einer lasersensitiven Schicht (2)

| | |
|---|---|
| 18,5 g | Ethylacetat |
| 1,5 g | PVB (Polyvinylbutyral, Polioform® , Fa. Wacker-Chemie) |
| 2,0 g | Gasruß (d₅₀ Wert < 17 nm) (Spezialschwarz 6 der Fa. Degussa) |

Die Verarbeitung erfolgt wie in Ausführungsbeispiel 2. Als lasersensitive Komponente wird Gasruß eingesetzt.

Die Verdruckung der Farbe erfolgt im Tiefdruck wie in Beispiel 1 beschrieben.

### Beispiel 4: Herstellung einer lasersensitiven Schicht (2)

| | |
|---|---|
| 20 g | Masterblend 50 (Fa. SICPA-AARBERG AG) |
| 15 g | Iriodin® Lazerflair 825 (Pigment der Fa. Merck KGaA) |
| 10 g | Ethylacetat/Ethanol (1:1) |

Der Laserlicht-Absorber Iriodi® Lazerflair 825 wird in das Masterblend 50 schonend eingetragen und im Tiefdruck auf ein für den Wertpapierdruck geeignetes Papier gedruckt. Mit dem Lösungsmittelgemisch Ethylacetat/Ethanol kann die gewünschte Viskosität eingestellt werden (DIN 4-Becher (DIN 53211) 14-25 s). Das Auftragsgewicht beträgt 0,5 - 1 g/cm². Die Schichtdicke beträgt 4-8 µm.

### Beispiel 5: Herstellung einer lasersensitiven Schicht (2)

| | |
|---|---|
| 45 - 47,5 g | Weilburger Senolit HGL |
| 2,5 - 5,0 g | Budit 322 (Cu-Hydroxidphosphat der Fa. Budenheim) |

Der lasersensitive Budit 322 wird in Pulverform in das Druckmedium eingetragen und im Tiefdruck auf ein für den Wertpapierdruck geeignetes Papier gedruckt. Das Auftragsgewicht beträgt 0,5 - 1 g/cm². Die Schichtdicke beträgt 4 - 8 µm.

### Beispiel 6: Herstellung einer lasersensitiven Schicht (2)

| | |
|---|---|
| 45 - 47,5 g | Weilburger Senolit HGL |
| 2,5 - 5,0 g | Colorcode® LM (Teilchengröße < 5 µm) (Fa. Merck KGaA) |

Der Laserlicht-Absorber Colorcode® LM wird in das Weilburger Senolit schonend eingetragen und im Tiefdruck auf ein für den Wertpapierdruck geeignetes Papier gedruckt. Das Auftragsgewicht beträgt 0,5 - 1 g/cm². Die Schichtdicke beträgt 4 - 8 µm.

### Beispiel 7: Herstellung einer lasersensitiven Druckfarbe (5)

**Wässriger Siebdruck**

| | |
|---|---|
| 9,75 g | Colorcrypt® Red-Gold (Sicherheitspigment der Fa. Merck KGaA) |
| 0,75 g | Sandospers Gelb WF 013 (Pigmentkonzentration 38 %, Fa. Clariant) |
| 5 g | Colorcode® LM (Teilchengröße < 5 µm) (Fa. Merck KGaA) |
| 87,5 g | Helizarin MT 92 (Fa. BASF) |

Die Pigmente und Pigmentpräparation werden in das Bindemittelsystem unter Vermeidung hoher Scherkräfte eingerührt. Die Verdruckung erfolgt im Flachbett-Siebdruck unter Verwendung eines 80T Siebs mit monofilem Siebgewebe. Die Viskosität der Druckfarbe liegt zwischen 2-10 Pa · s. Die Schichtdicke beträgt 8-20 µm.

### Beispiel 8: Erzeugung einer selektiv ablatierten Schrift mit innen liegender Mikroschrift

Auf ein für den Wertpapierdruck geeignetes Papier wird eine Druckfarbe (5) aus Iriodin® 123 (TiO₂/Glimmerpigment der Fa. Merck KGaA) als Pigment und Nitrocellulose als Binder und PVC-Pulver (z.B. Solvin 072GA, Fa. Solvay) oder PA-Pulver (Vestosint 2070, Fa. Degussa) im Siebdruck aufgebracht und mit einem Nd-Vanadat-Laser (1064 nm) gelasert. Zur Erstellung der selektiv ablatierten Buchstabenfolge wird die Laserleistung eines Nd-Vanadat-Lasers von 30 bis 80 % in 10er-Schritten bei einer Geschwindigkeit von 500 mm/s und einer Frequenz von 40 bis 60 kHz im gepulsten Betrieb variiert.

In diese Kennzeichnung hinein erfolgt eine weitere Markierung durch eine Mikroschrift. Mit 80 % Laserleistung bei 500 mm/s und 40 kHz werden Mikroschriften mit Schrifthöhen unter 500 µm und Strichstärken von 40 µm erzielt.

## Patentansprüche

1. Laserkennzeichnung von Wertdokumenten, wobei auf ein Substrat ein Druckfarbenschichtsystem aus zwei oder zur drei Schichten aufgebracht wird, wobei mindestens eine Schicht im Druckfarbensystem eine lasersensitive Komponente enthält und die Druckfarbe mittels eines Lasers selektiv abgetragen wird, **dadurch gekennzeichnet**, daβ das Druckfarbenschichtsystem Sicherheitspigmente enthält, und daβ zusätzlich in den selektiv abgetragenen Bereichen mit dem Laser Mikroschriften/-bilder erzeugt werden.

2. Laserkennzeichnung von Wertdokumenten nach Anspruch 1, **dadurch gekennzeichnet, dass** als Substrat Papier, Pappe, Karton, Kunststoff, Kunststofffolien oder Laminate mit der Druckfarbe oder dem Druckfarbenschichtsystem bedruckt werden.

3. Laserkennzeichnung von Wertdokumenten nach Anspruch 1 oder 2, **dadurch gekennzeichnet, dass** ein Dreischichtsystem ein Schichtsystem aus Druckfarbe - lasersensitive Schicht - Druckfarbe aufweist.

4. Laserkennzeichnung von Wertdokumenten nach einem oder mehreren der Ansprüche 1 bis 3, **dadurch gekennzeichnet, dass** es sich bei einem Zweischichtsystem um zwei Schichten aus Druckfarbe handelt, die gleich oder verschieden sein können, wobei eine Druckfarbenschicht eine lasersensitive Komponente enthält.

5. Laserkennzeichnung von Wertdokumenten nach einem oder mehreren der Ansprüche 1 bis 4, **dadurch gekennzeichnet, dass** die lasersensitive Komponente ausgewählt ist aus der Gruppe Kohlenstoff, Ruß, Graphit, Sn(Sb)O₂, TiO₂, Anthracen, IRabsorbierende Farbmittel, Pentaerythrit, Kupferhydroxidphosphaten, Molybdändisulfiden, Antimon(III)oxid und Wismuthoxychlorid, Schichtsilikaten, synthetischer Glimmer, mit Metalloxiden beschichtete Plättchen aus Glimmer, Glas oder SiO₂, Talkum, Kaolin, Glasplättchen, SiO₂-Plättchen, plättchenförmiges Eisenoxid, Aluminiumoxid, Titandioxid, Siliziumdioxid, LCP's (Liquid Crystal Polymers), holographische Pigmente, leitfähige Pigmente, beschichtete Graphitplättchen oder deren Gemische.

6. Laserkennzeichnung von Wertdokumenten nach einem oder mehreren der Ansprüche 1 bis 5, **dadurch gekennzeichnet, dass** die lasersensitive Komponente in der Druckfarbe zu 0,5-40 Gew.% bezogen auf das Gesamtgewicht der flüssigen Druckfarbe vorhanden ist.

7. Laserkennzeichnung von Wertdokumenten nach einem oder mehreren der Ansprüche 1 bis 6, **dadurch gekennzeichnet, dass** es sich bei den Sicherheitspigmenten um optisch variable Pigmente, Perlglanzpigmente, Interferenzpigmente, goniochromatische Glanzpigmente, Mehrschichtpigmente oder deren Gemische handelt.

8. Laserkennzeichnung von Wertdokumenten nach einem oder mehreren der Ansprüche 1 bis 7, **dadurch gekennzeichnet, dass** die Druckfarbe ein oder mehrere Farbmittel enthält.

9. Laserkennzeichnung von Wertdokumenten nach einem oder mehreren der Ansprüche 1 bis 8, **dadurch gekennzeichnet, dass** als Nd:YAG-, Nd:YVO₄-, Dioden- oder CO₂-Laser verwendet werden.

## Claims

1. Laser marking of documents of value, where a printing-ink layer system comprising two or three layers is applied to a substrate, where at least one layer in the printing-ink system comprises a laser-sensitive component, and the printing ink is removed selectively by means of a laser, **characterised in that** the printing-ink layer system comprises security pigments, and **in that** microinscriptions/-images are additionally generated in the selectively removed areas by means of the laser.

2. Laser marking of documents of value according to Claim 1, **characterised in that** paper, cardboard, board, plastic, plastic films or laminates as substrate are printed with the printing ink or printing-ink layer system.

3. Laser marking of documents of value according to Claim 1 or 2, **characterised in that** a three-layer system has a layer system comprising printing ink- laser-sensitive layer- printing ink.

4. Laser marking of documents of value according to one or more of Claims 1 to 3, **characterised in that** a two-layer system comprises two layers of printing ink, which may be identical or different, where one printing-ink layer comprises a laser-sensitive component.

5. Laser marking of documents of value according to one or more of Claims 1 to 4, **characterised in that** the laser-sensitive component is selected from the group carbon, carbon black, graphite, Sn(Sb)O₂, TiO₂, anthracene, IR-absorbent colorants, pentaerythritol, copper hydroxide phosphates, molybdenum disulfides, antimony(III) oxide and bismuth oxychloride, phyllosilicates, synthetic mica, metal oxide-coated flakes of mica, glass or SiO₂, talc, kaolin, glass flakes, SiO₂ flakes, flake-form iron oxide, aluminium oxide, titanium dioxide, silicon dioxide, LCPs (liquid crystal polymers), holographic pigments, conductive pigments, coated graphite flakes or mixtures thereof.

6. Laser marking of documents of value according to one or more of Claims 1 to 5, **characterised in that** the laser-sensitive component is present in the printing ink in an amount of 0.5-40% by weight, based on the total weight of the liquid printing ink.

7. Laser marking of documents of value according to one or more of Claims 1 to 6, **characterised in that** the security pigments are optically variable pigments, pearlescent pigments, interference pigments, goniochromatic lustre pigments, multilayered pigments or mixtures thereof.

8. Laser marking of documents of value according to one or more of Claims 1 to 7, **characterised in that** the printing ink comprises one or more colorants.

9. Laser marking of documents of value according to one or more of Claims 1 to 8, **characterised in that** the laser used is an Nd:YAG, Nd:YVO₄, diode or CO₂ laser.

## Revendications

1. Marquage laser de documents de valeur, où un système de couches d'encre d'impression comprenant deux ou trois couches est appliqué à un substrat, où au moins une couche dans le système d'encre d'impression comprend un composant sensible au laser, et l'encre d'impression est éliminée sélectivement au moyen d'un laser, **caractérisé en ce que** le système de couches d'encre d'impression comprend des pigments de sécurité, et **en ce que** des micro-inscriptions/images sont de plus générées dans les zones sélectivement éliminées au moyen du laser.

2. Marquage laser de documents de valeur selon la revendication 1, **caractérisé en ce que** du papier, du carton fort, du carton, des matières plastiques, des films en plastique ou des stratifiés comme substrats sont imprimés par l'encre d'impression ou le système de couches d'encre d'impression.

3. Marquage laser de documents de valeur selon la revendication 1 ou 2, **caractérisé en ce qu'**un système tri-couches possède un système de couches comprenant : encre d'impression - couche sensible au laser - encre d'impression.

4. Marquage laser de documents de valeur selon l'une ou plusieurs parmi les revendications 1 à 3, **caractérisé en ce qu'**un système bi-couches comprend deux couches d'encre d'impression, qui peuvent être identiques ou différentes, où l'une des couches d'encre d'impression comprend un composant sensible au laser.

5. Marquage laser de documents de valeur selon l'une ou plusieurs parmi les revendications 1 à 4, **caractérisé en ce que** le composant sensible au laser est choisi dans le groupe constitué par le carbone, le noir de charbon, le graphite, Sn(Sb)O₂, TiO₂, l'anthracène, les colorants absorbant dans l'IR, le pentaérythritol, les phosphates d'hydroxyde de cuivre, les disulfures de molybdène, l'oxyde d'antimoine (III) et l'oxychlorure de bismuth, les phyllosilicates, le mica synthétique, les paillettes de mica, de verre ou de SiO₂ revêtues d'oxyde métallique, le talc, le kaolin, les paillettes de verre, les paillettes de SiO₂, l'oxyde de fer sous forme de paillettes, l'oxyde d'aluminium, le dioxyde de titane, le dioxyde de silicium, les LCP (polymères à cristaux liquides), les pigments holographiques, les pigments conducteurs, les paillettes de graphite revêtues, ou des mélanges de ceux-ci.

6. Marquage laser de documents de valeur selon l'une ou plusieurs parmi les revendications 1 à 5, **caractérisé en ce que** le composant sensible au laser est présent dans l'encre d'impression selon une quantité de 0,5-40% en poids, basée sur le poids total de l'encre d'impression liquide.

7. Marquage laser de documents de valeur selon l'une ou plusieurs parmi les revendications 1 à 6, **caractérisé en ce que** les pigments de sécurité sont des pigments optiquement variables, des pigments nacrés, des pigments d'interférence, des pigments à reflets lustrés goniochromatiques, des pigments multicouches ou des mélanges de ceux-ci.

8. Marquage laser de documents de valeur selon l'une ou plusieurs parmi les revendications 1 à 7, **caractérisé en ce que** l'encre d'impression comprend un ou plusieurs colorants.

9. Marquage laser de documents de valeur selon l'une ou plusieurs parmi les revendications 1 à 8, **caractérisé en ce que** le laser utilisé est un laser Nd:YAG, Nd:YVO₄, une diode laser ou un laser au CO₂.
